# EUROPEAN PATENT APPLICATION

(11) **EP 0 641 586 A2**
(43) Date of publication of application: **08.03.1995**
(21) Application number: 94113725.9
(22) Date of filing: 01.09.1994
(51) Int. Cl.: B01D 27/10

(54) **Oil filter having spring-biased valve**

(71) Applicant: Kim, Tonghyon, Puk-Ku, Inchon (KR)
(72) Inventor: Kim, Tonghyon, Puk-Ku, Inchon (KR)
(74) Representative: Hering, Hartmut, Dipl.-Ing.

(57) **Abstract**

An oil filter having a spring-biased valve (5). The oil filter includes a rolled filter (7) constructed of a moisture-endurable paper rolled around moisture-endurable mandrel (72). The spring-biased valve (5) is received in an adjusting cylinder (3) and upwardly biased by a spring (4). This valve (5) is threaded (at 52) on its outer surface and has a spring seat (54) on its bottom end, which spring seat (54) seats the top of the spring (4) thereon. The valve (5) normally blocks oil adjusting ports (32) of the adjusting cylinder (3) screwed to the center of the filter canister (1) but naturally opens the oil adjusting port (32) so as to allow the oil to flow through the oil outlet when the oil pressure applied on the valve (5) is increased.

## Description

### Field of the Invention

The present invention relates in general to lubrication oil filters such as used in internal combustion engines of automobiles, heavy construction vehicles, vessels and electric generators and, more particularly, to structural improvement in such oil filters for prevention of insufficient oil circulation possibly generated such as in acceleration, long time running and winter time running of the internal combustion engines, for prevention of instable operation or sudden stop of oil filter valves caused by impurity-laden lubrication oil, for saving of management cost of the oil filter by allowing only a filter of the oil filter to be exchanged with new one, for prevention of waste of oil by allowing only the amount of oil corresponding to the oil impregnated in the filter to be added in exchange of oil, and for prevention of environmental pollution.

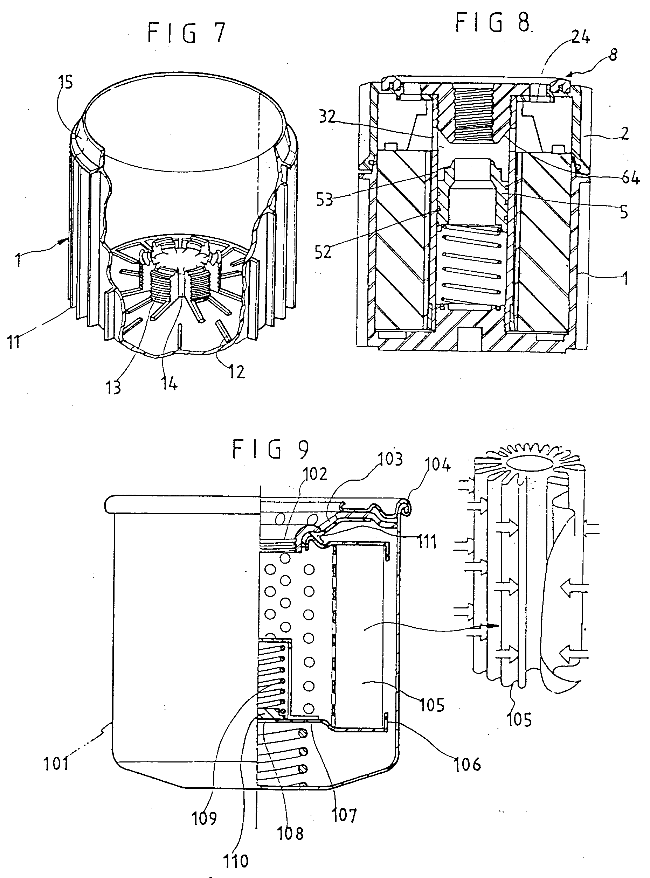

With reference to Fig. 9, there is shown a typical oil filter in a sectional view. The typical lubrication oil filter includes a cylindrical canister 101 that is covered with a lid 104 having both an oil outlet 102 and an oil inlet 103. Vertically placed in the canister 101 is a cylindrical pleated filter 105. This pleated filter 105 is tightly placed between top and bottom filter support plates 106. Here, the top plate 106 is an annular plate while the bottom plate constitutes a bottom fixing plate 107 that is provided with a center through hole 108. The center through hole 108 of the bottom fixing plate 107 is normally blocked by a spring-biased valve 110. This valve 110 is biased downwardly by a compression coil spring 109. When stopping an internal combustion engine (not shown), the oil is discharged to the outside of the oil filter through the oil inlet 103. Therefore, the oil can not be supplied to the engine for a time until the oil reaches the engine when starting the engine and this may cause the engine to be overloaded.

In order to prevent discharge of oil from the oil filter during stopping of the engine, the oil inlet 103 may be provided with a check valve 111 made of rubber. However, the rubber check valve 111 has a problem in that it can not assure reliable checking operation and can not achieve its intended operational effect.

It has been noted that large amount of oil needs to be rapidly supplied to the engine when the engine should be accelerated or run in winter time. However, since the cooperation of the valve 110 with the spring 109 is not smoothly achieved, the valve 110 normally blocking the center through hole 108 of the bottom fixing plate 107 is not reliably operated in the case of acceleration or winter time running of the engine.

In a continuous oil circulation, viscosity of the oil is reduced due to increase of the oil temperature. Due to high temperature of oil, the intrinsic function of the oil is deteriorated, thus to cause abrasion of the engine.

Moreover, since the oil passes through the side surface of the pleated filter 105 as shown in Fig. 9, the oil merely passes through one sheet filter. Therefore, the filter 105 can not filter off microparticles, so that the oil filter can not achieve desired filtering effect. In addition, the filter 105 can not remove the moisture impregnated in the oil and this causes the oil to be necessarily exchanged with new oil within a predetermined time.

It is, therefore, an object of the present invention to provide an oil filter having a spring-biased valve in which the aforementioned problems can be overcome and which includes a rolled filter constructed of moisture-endurable paper, thus to filter off microparticles, and includes screen filter nets placed on the top and the bottom of the rolled filter, thus to filter off sludge type or particle type impurities, and includes the spring-biased valve that normally blocks oil adjusting ports formed on the upper section of an oil adjusting cylinder screwed to the center of the filter canister but naturally opens the oil adjusting port so as to allow the oil to flow through the oil outlet when the oil pressure applied on the valve is increased, and readily cools the circulated oil using an aluminum material showing excellent heat transfer effect and includes appropriate size and appropriate number of radiating fins on the outer surfaces of both the canister and the cap, thus to promote the heat transfer effect.

In order to accomplish the above object, an oil filter with a spring-biased valve in accordance with an embodiment of the present invention comprises: a filter canister, the bottom of said canister having a plurality of radial guide protrusions and a threaded cylindrical fixture; a filtering net placed on the bottom of said canister; an adjusting cylinder having a plurality of adjusting ports on its side wall, said adjusting cylinder also having a threaded bottom engaged with said threaded cylindrical fixture of the canister; a filter placed about said adjusting cylinder such that the adjusting ports of the adjusting cylinder are completely exposed; a cap engaged with the top of said canister, said cap having an outlet port and receiving a screen net therein, the top end of said cap having a fitting projection ring for fitting an annular packing thereon; a fixing plug inserted into said outlet port of said cap and engaged with a threaded top section of the adjusting cylinder, said fixing plug having both a threaded plug portion and a top flange, said threaded plug portion being engaged with the threaded top section of the adjusting cylinder, and said flange pressing down the cap so as to fix said cap to the top of said canister; and an oil valve received in said adjusting cylinder and upwardly biased by a spring, said valve being threaded on its outer surface and having a spring seat on its bottom end, said spring seat seating the top of said spring thereon.

The above and other objects, features and other advantages of the present invention will be more clearly understood from the following detailed description taken in conjunction with the accompanying drawings, in which:
Fig. 1 is an exploded perspective view of an oil filter in accordance with a preferred embodiment of the present invention;
Fig. 2 is a sectional view of the assembled oil filter of Fig. 1;
Fig. 3 is an enlarged sectional view of a spring-biased valve of the oil filter of Fig. 1;
Fig. 4 is an enlarged sectional view of an adjusting cylinder of the oil filter of Fig. 1;
Fig. 5 is an enlarged sectional view of a fixing plug of the oil filter of Fig. 1;
Fig. 6 is a partially broken perspective view of a cap of the oil filter of Fig. 1;
Fig. 7 is a partially broken perspective view of a canister of the oil filter of Fig. 1;
Fig. 8 is a sectional view of the oil filter of Fig. 1, showing the operation of the spring-biased valve; and
Fig. 9 is a sectional view of a typical oil filter.

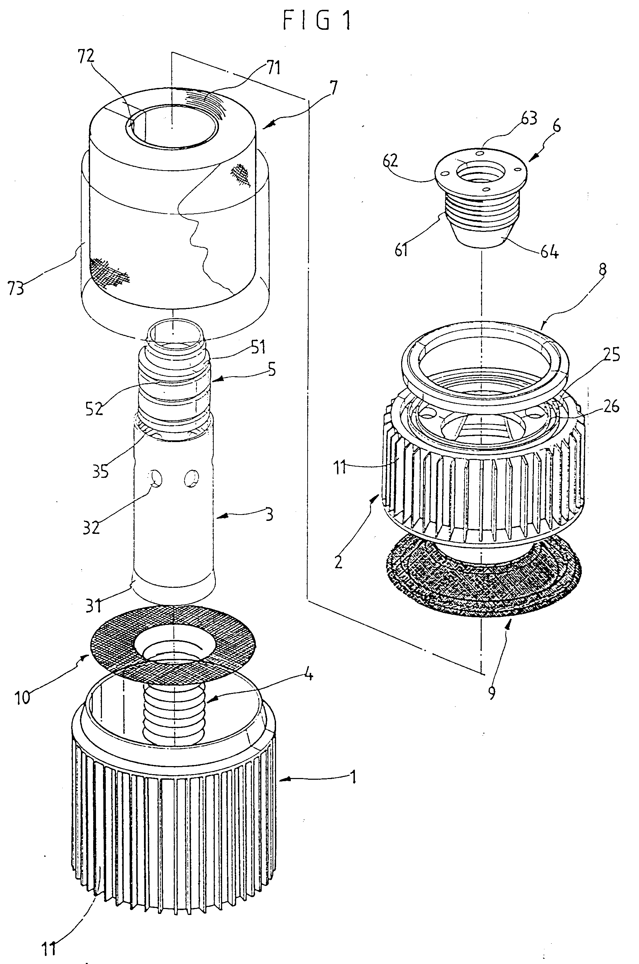

With reference to Fig. 1, there is shown an oil filter in accordance with a preferred embodiment of the present invention. As shown in this drawing, the oil filter includes a filter canister 1 whose inner bottom is provided with a plurality of radial guide protrusions 12. Placed on the bottom of the canister 1 is a filtering net 10. The bottom center of the canister 1 is provided with an outer threaded cylindrical fixture 13 that will be threaded with the inner threaded bottom of an adjusting cylinder 3. Tightly received in the top section of the adjusting cylinder 3 is an oil valve 5 which is the important element according to the present invention. This oil valve 5 is upwardly biased by a compression coil spring 4. The adjusting cylinder 3, which has a plurality of circumferentially arranged adjusting ports 32 on the upper portion of the cylinder wall, is surrounded by a rolled filter 7. The filter 7 is rolled around a cylindrical mandrel 72. When placing about the adjusting cylinder 3, the top end of the rolled filter 7 is aligned with the lower ends of the adjusting ports 32 of the cylinder 3, so that the adjusting ports 32 are completely exposed. The top of the canister 1 is covered with a cylindrical cap 2 that has a fitting projection ring 25 on its top end for fitting an annular packing 8 thereon. A screen net, 9 is received in the cap 2. The cap 2 is also provided with an outlet port 23 that is engaged with a fixing plug 6 in screw type fitting: In this case, the fixing plug 6 includes an outer threaded plug portion 61 that is threaded with an inner threaded portion 35 of the top section of the adjusting cylinder 3. The fixing plug 6 also includes a flange 62 that presses down the cap 2 so as to fix the cap 2 to the top of the canister 1.

As shown in Fig. 7, in order to cause the oil after being filtered by the filter 7 to flow out through the outlet port 23 of the cap 2 with lower load, the radial guide projections 12 provided on the bottom of the canister 1 are guided in precise arrangement such that the projections 12 are aligned with associated slits 14 of the outer threaded fixture 13 of the bottom of the canister 1. Vertically provided on the outer surface of the canister 1 are radiating fins 11 for cooling the heated oil. The top of the canister 1, which top is to be closely threaded with the cap 2, is provided with a slant surface 15 that is adapted to improve the engaging force between the canister 1 and the cap 2.

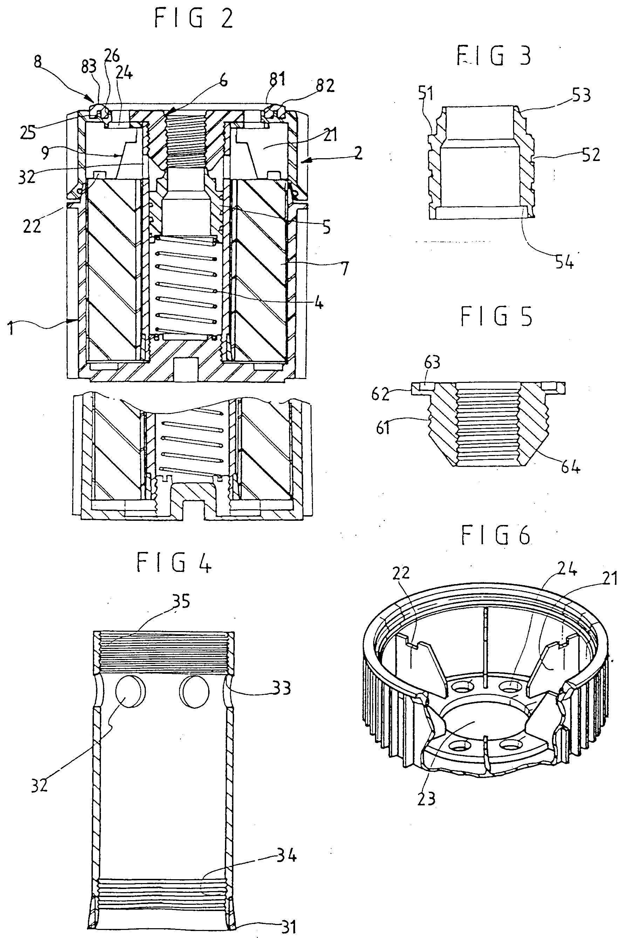

As shown in Fig. 6, the cap 2 is provided on its outer surface with radiating fins 11 showing the same effect as described for the fins 11 of the canister 1. The top of the cap 2 has the fitting projection 25 for fitting the annular packing 8 thereon. When fitting the annular packing 8 on the fitting projection 25, the packing 8 is tightly threaded with the fitting projection 25 due to an annular groove 81 of the packing 8. Since partitions 26 are provided on opposed sides of the fitting projection 25, the packing 8 is not thrusted even when the packing 8 is compressed. The inside of the cylindrical cap 2 is divided into several sectors by a plurality of radial partitions 21 that are spaced out at regular intervals. The top end of each of the radial partitions 21 has a rectangular notch 22 that will receive a coupling protrusion 92 of the screen net 9.

As shown in Fig. 4, the lower section of the adjusting cylinder 3 has an inner threaded portion 34 that will be engaged with the outer threaded cylindrical fixture 13 of the canister bottom. The adjusting cylinder 3 also has a guide cylinder 31 that is fitted over the lower end of the cylinder 3. The outer diameter of the guide cylinder 31 is gradually reduced such that the top end of the guide cylinder 31 has the smallest outer diameter while the bottom end of the guide cylinder 31 has the largest outer diameter. That is, the guide cylinder 31 shows a frusto-conical profile. The guide cylinder 31 fitted over the bottom end of the adjusting cylinder 3 not only prevents the filter 7 from being thrusted when the filter 7 is fitted over the adjusting cylinder 3 but also causes the filtered oil to be smoothly circulated. When the filter 7 is fitted over the adjusting cylinder 3, the top end of the filter 7 is aligned with the lower ends of the adjusting ports 32 of the cylinder 3, so that the adjusting ports 32 are completely exposed. The top section of each adjusting port 32 is inclined toward the outer surface of the adjusting cylinder 3, thus to form the slant surface 33. The inner surface of the top section of the adjusting cylinder 3 above the adjusting ports 32 is threaded, thus to form the inner-threaded portion 35 that will be engaged with the outer-threaded plug portion 61 of the fixing plug 6.

The valve 5, which is received in the adjusting cylinder 3 and upwardly biased by the coil spring 4 whose top end is seated on a spring seat 54 of the valve 5 as shown in Fig. 3, is provided with appropriate depth of threads 52 on its outer surface. Above the uppermost thread 52 of the valve 5, the valve 5 has a shoulder 51 that will be applied with oil pressure. The top end of the valve 5 is inclined so as to form a slant surface 53. The slant surface 53 causes smooth flow of fluid.

As shown in Fig. 5, the outer threaded plug portion 61 of the fixing plug 6, which portion 61 will be threaded with the inner-threaded portion 35 of the adjusting cylinder 3, is inclined on its outer surface, thus to form a slant surface 64 for causing smooth flow of fluid. The fixing plug 6 also includes the flange 62 which is formed on the top of the plug 6. The flange 62, which is adapted to press down the cap 2 and to fix the cap 2 to the top of the canister 1, is provided on its top surface with a plurality of slots 63 that will be engaged with a jig (not shown) when opening or closing the cap 2 by force.

The filter 7 surrounding the adjusting cylinder 3 is constructed of moisture-endurable paper. Here, the term "moisture-endurable" means that the paper of the filter 7 is not deformed" even when the paper absorbs moisture. The rolling times of the moisture-endurable paper of the filter 7 around the cylindrical mandrel 72 may be adjusted in accordance with effected oil pressure. The moisture-endurable paper of the filter 7 is rolled around a predetermined thickness of mandrel 72, thus to form the rolled filter 7. In the present invention, the mandrel 72 is moisture-endurable, that is, the mandrel 72 should not be deformed even when it is moisturized.

The operational effect of the oil filter in accordance with the present invention will be given hereinbelow.

The unfiltered oil is outputted from an oil reservoir (not shown) by pumping force of an oil pump and circulates through the engine drive system. The unfiltered oil is, thereafter, introduced into the oil filter through an oil inlet 24 of the cap 2. In the oil filter, the first circulating oil forms vortex such as due to sudden change of its flow direction, thus to foam and to cause irregular flow of oil. The irregular flow of the oil may cause the oil to show high pressure, however, the high pressure of the oil will be relieved by the six radial partitions 21 of the cap 2. The screen net 9 first filters the oil so as to filter off impurities such as solid particles. The oil, after being filtered by the screen net 9, is introduced under pressure into the oil filter. In this case, the filter 7 filters off microparticles of about 0.01 µm particle size since both the fixing plug 6 and the valve 5 normally block the adjusting ports 32 of the adjusting cylinder 3 by the restoring force of the compression coil spring 4 and, at the same time, the filter 7 is constructed of the rolled moisture-endurable paper differently from the prior oil filters. Hence, the oil filter of this invention filters off moisture, carbons, iron content, rubber content and the like from the oil, thus to completely filter the oil and to cause the oil to recover the ideal viscosity.

At this time, the oil passes through the rolled filter 7 of the present invention, so that oil filtering area of the filter 7 is remarkably increased in comparison with the prior filters. In the prior filters, the oil merely passes through one sheet filter. With the rolled filter 7 of this invention, the desired filtering effect is achieved. The particles in the oil are completely filtered off by both the screen net 9 and the filtering net 10. When the amount of circulating oil is rapidly increased such as when accelerating the engine, the increased oil pressure is applied on the shoulder 51 of the valve 5, which valve 5 blocks the adjusting ports 32 of the adjusting cylinder 3. With the oil pressure applied on the shoulder 51 of the valve 5, the valve 5 moves downward while compressing the coil spring 4, thus to open the adjusting ports 32 of the adjusting cylinder 3 as shown in Fig. 8. When the adjusting ports 32 are opened as a result of downward movement of the valve 5, large amount of oil along with filtered oil flows through the adjusting ports 32. When the oil, which is introduced into the adjusting cylinder 3 through the adjusting ports 32, includes particles therein, the valve 5 may not smoothly move downward since the particles may be jammed in the gap between the valve 5 and the adjusting cylinder 3. However, in accordance with the oil filter of this invention, the particles in the oil can move along the threads 52 formed on the outer surface of the valve 5, so that the oil filter achieves accurate valve operation regardless of the particles in the oil.

Therefore, even when the oil pressure is equal to the restoring force of the compression coil spring 4, the valve 5 of this invention achieves its downward movement more rapidly, more precisely and more sensitively than the prior valve rings. At this time, the oil in the valve 5 instantaneously turns its flow direction so as to cause the valve 5 to precisely move downward and to form a space, through which space the oil is rapidly introduced into the inside of the fixing plug 6. The oil is mixed, with atomized lubrication oil filtered by a filtering part, thus to make the pressure difference be constant and to cause precise amount of oil to be introduced into a rotating part at the same flow rate.

When the oil pressure applied on the shoulder 51 of the valve 5 is rapidly dropped as the pressurized oil flows out as a result of precise and rapid downward movement of the valve 5, the valve 5 elastically moves upward due to the restoring force of the compression coil spring 4, and thus returns to its original position.

As described above, the present invention provides an oil filter that can prevent trouble of the engine caused by oil shortage possibly generated in high speed running of the engine.

Furthermore, the valve 5 of the oil filter of this invention is designed such that the microparticles included in the unfiltered oil well flow off along the precisely machined threads of the valve. The oil filter of this invention thus can prevent possible operational problem of the valve caused by the particles jammed in the gap between the adjusting cylinder 3 and the valve 5, so that the oil filter completely overcomes the problems caused by sudden stop of the valve operation during either high speed running or an extreme situation running of the engine, such as winter time running or running on desert.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An oil filter comprising:
a filter canister (1), the bottom of said canister (1) having both a plurality of radial guide protrusions (12) and a threaded cylindrical fixture (13):
a filtering net (10) placed on the bottom of said canister (1);
an adjusting cylinder (3) having a plurality of adjusting ports (32) on its side wall, said adjusting cylinder (3) also having a threaded bottom (34) that is engaged with said threaded cylindrical fixture (13) of the canister (1);
a filter (7) placed about said adjusting cylinder (3) such that the adjusting ports (32) of the adjusting cylinder (3) are completely exposed;
a cap (2) engaged with the top of said canister (1), said cap (2) having an outlet port (23) and receiving a screen net (9) therein, the top end of said cap (2) having a fitting projection ring (25) for fitting an annular packing (8) thereon;
a fixing plug (6) inserted in said outlet port (23) of said cap (2) and engaged with a threaded top section (35) of the adjusting cylinder (3), said fixing plug (6) having both a threaded plug portion (61) and a top flange (62), said threaded plug portion (61) being engaged with the threaded top section (35) of the adjusting cylinder (3), and said flange (62) pressing down the cap (2) so as to fix said cap (2) to the top of said canister (1); and
an oil valve (5) received in said adjusting cylinder (3) and upwardly biased by a spring (4), said valve (5) being threaded (at 52) on its outer surface and having a spring seat (54) on its bottom end, said spring seat (54) seating the top of said spring (4) thereon.

2. The oil filter according to claim 1, wherein said filter (7) is constructed of a moisture-endurable paper rolled around a moisture-endurable mandrel (72) predetermined times.
